# EUROPEAN PATENT SPECIFICATION

(11) **EP 3 406 320 B1**
(45) Date of publication and mention of the grant of the patent: **12.08.2020**
(21) Application number: 17177421.9
(22) Date of filing: 22.06.2017
(51) Int. Cl.: B01D 47/06, B01D 53/34, B01D 53/75, B01D 53/78, B01D 53/96, B01D 53/50, B01D 53/86, C10G 11/18

(54) **METHOD AND APPARATUS FOR DENITRATION AND DESULFURIZATION OF AND DUST REMOVAL FROM FCC TAIL GAS BY AMMONIA-BASED PROCESS**
VERFAHREN UND VORRICHTUNG ZUR DENITRIERUNG UND ENTSCHWEFELUNG UND ENTSTAUBUNG VON FCC-RESTGAS DURCH AMMONIAKBASIERTES VERFAHREN
PROCÉDÉ ET APPAREIL DE DÉSULFURATION, DE DÉNITRATION ET D'ÉLIMINATION DE POUSSIÈRE DE GAZ RÉSIDUAIRE FCC PAR PROCÉDÉ À BASE D'AMMONIAQUE

(30) Priority: 25.05.2017 CN 201710379458
(43) Date of publication of application: 28.11.2018
(73) Proprietor: Jiangnan Environmental Protection Group Inc., Grand Cayman (KY)
(72) Inventor: LUO, Jing, Jiangning District, Nanjing 211100 (CN); ZHANG, Jun, Jiangning District, Nanjing 211100 (CN); LUO, Yongying, Jiangning District, Nanjing 211100 (CN); TAN, Qiang, Jiangning District, Nanjing 211100 (CN); XU, Xiangjun, Jiangning District, Nanjing 211100 (CN)
(74) Representative: Bottero, Carlo

(56) References cited:
- CN-A- 103 041 678
- CN-A- 104 941 423
- CN-A- 105 126 573
- CN-U- 201 643 982
- CN-U- 204 352 726
- CN-U- 205 815 447
- CN-Y- 201 380 039

## Description

### Technical Field

The present invention relates to the field of environmental protection technologies, and in particular to a method and an apparatus for denitration and desulfurization of and dust removal from an FCC tail gas by an ammonia-based process.

### Background

SO₂, NOₓ, and dust are main pollutants in the atmosphere and are a significant source of smog. With the increasing total industrial pollution load and the limited environmental receptivity, the emission standards need to be further improved, to reduce the concentration of emitted pollutants. The FCC tail gas is characterized by large fine particulate level (particulates with a size of 0-10 µm account for 50% or more) and high SO₂ concentration (300-4500 mg/m³). Moreover, the dust level fluctuates greatly; particularly when the catalyst loss occurs in a regenerator during the regular "soot blowing" process and in an accident state of a high-temperature economizer, the dust level is increased dramatically. In addition to silicon, aluminum and other metal elements, the dust also contains nickel, vanadium and other heavy metal elements, thus affecting the quality of by-products, and affecting the resourcelization of sulfur. All these factors have increased the difficulty in effective management of the flue gas pollution occurring during the catalyst regeneration of a catalytic cracking unit.

After more stringent environmental protection standards and policies for the power, steel and other industries were formulated intensively in recent years, the Ministry of Environment Protection of the People's Republic of China issued the "Emission standard of pollutants for petroleum refining industry" (GB31570- 2015) on April 16, 2015, which imposes more stringent requirements on the emission of major pollutants in the FCC regenerative flue gas (FCC tail gas), in which the specific emission limits for NOₓ, SO₂, and particulate matter are set to 100 mg/m³, 50 mg/m³ and 30 mg/m³. Therefore, the desulfurization, desulfurization and dust removal of the FCC regenerative flue gas are a very difficult task, and it is imperative to develop a more effective deep denitrification desulfurization and dust removal process and technology with the resourcelization of sulfur, so as to meet the more stringent environmental protection requirements.

At present, the dust removal from and the desulfurization of the FCC regenerative flue gas in China mainly rely on the use of the wet washing technology; however, the investment, operation and maintenance costs are high, and the construction period of the system is long. Moreover, these technical methods also have the problems such as high consumption of lye, large volume of waste water and others. The existing popular sodium process is a disposable process, in which the desulfurization and dust removal operations have no need to be separated; however, high salt waste water is required to be treated, secondary pollution is caused, and a large amount of catalyst enters into the washing liquid under the operating condition of catalyst loss, which not only increases the treatment load of the waste solid, and also causes the waste of the catalyst, thus affecting the long-term stable operation of the system. In view of this, technologies for treating the FCC regenerative flue gas pollution are also studied and developed in China in recent years. Chinese Patent Application No. CN 104941423A disclosed a method and apparatus for denitration and desulfurization of and dust removal from an FCC regenerative flue gas by an ammonia-based process on September 30, 2015. The method includes the steps of entering the high-temperature flue gas containing the catalyst dust produced during the catalyst regeneration of a catalytic cracking unit to a waste heat recovery boiler I, where the temperature of the flue gas is reduced to 280-430°C, and the heat of the flue gas is utilized by the waste heat recovery boiler I to produce steam for output; entering the flue gas at 280-430°C into a denitration system for denitration; after adequate reaction on the surface of the denitration catalyst in the denitration reactor, entering the flue gas into a waste heat recovery boiler II via a flue gas vent; removing the sulfur dioxide and nitrogen oxide in the flue gas by reacting with ammonia, with ammonium sulfate being produced as a by-product, and removing the catalyst dust in the flue gas at the same time, to obtain a cleaned gas that is discharged up to standard.

In the method, an integrated desulfurization and dust removal technology by an ammonia-based process is employed. Although the process is simple, the obstacles during operation are fewer, the space occupied by the device is small, and the investment and operation costs are saved, the applicant finds during the long-term operation and practice that where the same absorption liquid is used for dust removal and desulfurization, the absorption liquid containing ammonium sulfate is hard to be separated from the dust because the particle size of the catalyst dust is small. In order to ensure the quality of the ammonium sulfate product, the separation process needs to be strengthened, resulting in an increased investment and operation cost of the separation process. The method necessitates that the dust level in the flue gas at the inlet is 30-800 mg/Nm³. The dust removal and the desulfurization are carried out at the same time, and there is mutual interference, thus affecting the long-term stable operation of the apparatus. Especially when the dust level in the flue gas at the inlet is as high as 5000 mg/Nm³, and the total amount exceeds 2 tons under an accident condition, ingredients entering the circulating absorption liquid will affect the absorption liquid, and the desulfurization and dust removal efficiencies, and the absorption liquid cannot be effectively separated from the dust, thus affecting the quality of the product ammonium sulfate.

There is an urgent need for a recovery-type deep denitration, desulfurization and dust removal technology to overcome the shortcomings existing in the prior art.

### Summary of the Invention

In order to solve the technical problems in the prior art that by the existing process for denitration and desulfurization of and dust removal from an FCC tail gas by an ammonia-based method, only raw flue gas having a dust level of 30-800 mg/Nm³ can be treated, causing a narrowed scope of applicability of the process; the quality of the by-product ammonium sulfate is hard to be ensured, and if the separation process is strengthened, the investment and operation cost will be caused to increase; and the dust removal and the desulfurization are carried out at the same time, such that the apparatus has difficulty to operate stably for a long period of time, and a large amount of catalyst enters the washing liquid under an operation condition of catalyst loss, causing the increased treatment load of the waste solid and the waste of the catalyst, the present invention provides an apparatus and a method for denitration and desulfurization of and dust removal from an FCC tail gas by an ammonia-based process. The apparatus for denitration and desulfurization of and dust removal from an FCC tail gas by an ammonia-based process according to the present invention can operate stably for a long period of time. The by-product ammonium sulfate obtained from the method for denitration and desulfurization of and dust removal from an FCC tail gas by an ammonia-based process according to the present invention has high quality, high desulfurization rate, high denitration rate, and high dust removal rate, and the cleaned flue gas meets the requirement as specified by GB31570-2015 "Emission standard of pollutants for petroleum refining industry".

In the present invention, the following technical solutions are employed to solve the above technical problems.

A technical solution of the present invention is to provide an apparatus according to claim 1, for denitration and desulfurization of and dust removal from an FCC tail gas by an ammonia-based process. The apparatus includes a first-stage waste heat recovery system, a denitration system, a dust removal and desulfurization system, a tail gas exhaust system, and an ammonium sulfate post-processing system. The denitration system has a feed port for a denitration reducing agent provided thereon. The dust removal and desulfurization system includes a dedusting tower and an absorption tower disposed separately. The top and the bottom of the absorption tower are connected respectively to the tail gas exhaust system and the ammonium sulfate post-processing system. The dedusting tower is provided with at least 2 layers of washing liquid sprayers, and at least one layer of demisters are provided above the washing liquid sprayers in the dedusting tower. The absorption tower includes sequentially, from bottom to top, an oxidation section, an absorption section, and a fine particulate control section, where the absorption section is provided with at least 2 layers of sprayers in the absorption section, and the fine particulate control section is provided with 1 to 4 cyclically washing layers with dilute ammonium sulfate solution.

In the present invention, the first-stage waste heat recovery system, the denitration system, the dedusting tower and the absorption tower are connected in sequence.

Preferably, the apparatus for denitration and desulfurization of and dust removal from an FCC tail gas by an ammonia-based process according to the present invention further includes a second-stage waste heat recovery system, where the first-stage waste heat recovery system, the denitration system, the second-stage waste heat recovery system, the dedusting tower, and the absorption tower are connected in sequence.

In the present invention, the denitration system is a denitration system for an FCC tail gas by an ammonia-based process conventionally used in the art. Preferably, the denitration system is a selective catalytic reduction (SCR) reactor, in which a rectifier is provided in an upper part of the SCR reactor, and an ammonia injection grid is provided at an inlet for the FCC tail gas of the SCR reactor.

The functions of the oxidation section, the absorption section and the fine particulate control section in the absorption tower are similar to those described in Chinese Invention Patent Application NOs. CN103301705B entitled "Apparatus and method for controlling fine particulates in flue gas for desulfurization", and CN104524948B entitled "Ultra-low discharge method for integrated ultrasonic desulfurization and dust removal" filed by the present applicants. The present invention is advantageous in that dedusting by water washing and desulfurization by an ammonia-based process are carried out in 2 separated towers. 80% or more dust is removed in the dedusting tower, whereby the product quality and the final dust emission index are ensured. Correspondingly, no cooling and washing section needs to be provided in the absorption tower.

In the present invention, 2 to 5 layers of washing liquid sprayers are preferably provided in the dedusting tower, in which the liquid to gas ratio between each layer of the washing liquid sprayers is not less than 1.1 L/m³, the spray coverage rate is not less than 120%, and the total spray coverage rate of the dedusting tower is not less than 200%. The dedusting tower preferably comprises 1 to 5 layers of demisters.

The demister of the dedusting tower is a demister conventionally used in the art, and preferably one or more of a baffle demister, a roof type demister, and a wire mesh demister.

In the present invention, the bottom of the dedusting tower is preferably further connected with a washing circulation pump, which is connected to a filtering system. The filtering system is connected respectively to the top of the dedusting tower and the absorption tower. An inlet for process water to the dedusting tower is provided at an upper portion of the dedusting tower.

Fresh process water or evaporated condensed water is added to the dedusting tower via the inlet for process water to the dedusting tower, and enters a circulating washing liquid. A part of the circulating washing liquid passes through the filtering system and enters the absorption tower.

In the present invention, the absorption spray liquid is collected in the oxidation section, and oxidized with air. Most of the slurry is recycled and, and a part of the slurry enters the ammonium sulfate post-processing system, in which a product ammonium sulfate is obtained. The slurry for recycling and the slurry entering the ammonium sulfate post-processing system for evaporation and recrystallization are drawn from different positions of the oxidation section. Preferably, the oxidation section is provided with 3 to 8 layers of gas - liquid dispersion enhancers.

In the present invention, the absorption tower preferably comprises 2 to 4 layers of sprayers in the absorption section, in which the liquid to gas ratio between each layer of the sprayers in the absorption section is not less than 1.1 L/m³, the spray coverage rate is not less than 120%, and the total spray coverage rate of the absorption section is not less than 300%.

In the present invention, more than 1 layer of demisters are preferably provided above the sprayers in the absorption section; and further preferably, the absorption section comprises 1 to 5 layers of demisters.

The demister of the absorption section is a demister conventionally used in the art, and preferably one or more of a baffle demister, a roof type demister, and a wire mesh demister.

In the present invention, the cyclically washing layer with dilute ammonium sulfate solution is conventional in the art. Preferably, the cyclically washing layer with dilute ammonium sulfate solution is provided with more than 1 layer of sprayers in the washing layer, and more than 1 layer of demisters are provided above the sprayers in the washing layer, in which the liquid to gas ratio between each layer of the sprayers in the washing layer is not less than 1.1 L/m³, the spray coverage rate is not less than 120%, and the total spray coverage rate of the fine particulate control section is not less than 300%. Further preferably, the washing layer comprises 1 to 4 layers of sprayers, and 1 to 5 layers of demisters.

The demister of the washing layer is a demister conventionally used in the art, and preferably one or more of a baffle demister, a roof type demister, and a wire mesh demister.

In the present invention, the bottom of the absorption tower is further connected with at least one absorption circulation pump, and the absorption section of the absorption tower has an inlet for absorption spray liquid provided thereon. Preferably, 2 absorption circulation pumps are present, where several branches running from one of the absorption circulation pumps are connected respectively to the inlet for the absorption spray liquid of the absorption tower and the ammonium sulfate post-processing system; and the other absorption circulation pump is directly connected to the inlet for the absorption spray liquid of the absorption tower. An inlet for process water to the absorption tower is provided at an upper portion of the absorption tower, and an inlet for an ammonia-containing absorbent and an inlet for air as oxidant are provided at a lower portion of the absorption tower.

Fresh process water or evaporated condensed water is added to the absorption tower via the inlet for process water to the absorption tower.

After sulfur dioxide is absorbed in the absorption section, the FCC tail gas enters the fine particulate control section, and is cyclically washed with dilute ammonium sulfate solution to absorb the fine particulates (including fine particulates in dust entrained in the FCC tail gas, escaped ammonia, and aerosol), where the size of the fine particulates is ≤ 1 µm.

In the present invention, the tail gas exhaust system is conventional in the art, and disposed lateral to or on the top of the desulfurization unit. The tail gas exhaust system is preferably a tail gas exhaust chimney when disposed on the top of the desulfurization unit.

In the present invention, the ammonium sulfate post-processing system is conventional in the art. Preferably, the ammonium sulfate post-processing system includes an evaporation and crystallization device, a cyclone, a centrifuge, a dryer, and a packaging machine connected in sequence, in which the evaporation and crystallization device is connected to the absorption tower.

In the present invention, the shell, the internals, and pipes of the dedusting tower, the absorption tower, and the evaporation and crystallization device are all made with a corrosion resistant material, and preferably with a stainless-steel material of Grade 022Cr17Ni12Mo2, a dual-phase steel material of Grade 00Cr22Ni5Mo3N, a dual-phase steel material of Grade 00Cr25Ni6Mo2N, a titanium-based material, or Q235B steel lined with epoxy glass flakes.

The connection relation in the above apparatus will be further described below.

The first-stage waste heat recovery system and the denitration system are connected in a relation that is conventional in the art. Generally, an outlet of the first-stage waste heat recovery boiler is connected to a gas inlet of the denitration system; and an outlet of the denitration system is connected to the second-stage waste heat recovery system.

Another technical solution of the present invention is to provide a method according to claim 11, for denitration and desulfurization of and dust removal from an FCC tail gas by an ammonia-based process, using the apparatus for denitration and desulfurization of and dust removal from an FCC tail gas by an ammonia-based process. The method comprises the steps of:
(1) entering the FCC tail gas sequentially into the first-stage waste heat recovery system and the denitration system for cooling and denitration respectively, in which the temperature of the tail gas is reduced to 250-350°C;
(2) after treatment in the denitration system, entering the discharged FCC tail gas into the dust removal and desulfurization system, for dust removal in the dedusting tower and desulfurization in the absorption tower respectively; and
(3) discharging the cleaned tail gas after desulfurization via the tail gas exhaust system, and collecting the by-product ammonium sulfate in the ammonium sulfate post-processing system.

In the present invention, the temperature of the FCC tail gas entering the first-stage waste heat recovery system is from 580 to 950°C, the NOₓ concentration is 100 to 1200 mg/Nm³, the SO₂ concentration is 200 to 30000 mg/Nm³, and the total dust level is 50 to 10000 mg/Nm³. Preferably the temperature of the FCC tail gas entering the first-stage waste heat recovery system is from 600 to 670°C, the NOₓ concentration is 250 to 800mg/Nm³, the SO₂ concentration is 500 to 5000 mg/Nm³, and the total dust level is 100 to 300 mg/Nm³.

In the present invention, the denitration in Step (1) is carried out following a conventional denitration process in the art, and preferably following a selective catalytic reduction (SCR) process or a selective non-catalytic reduction (SNCR) process. The reducing agent used during denitration is conventional in the art, and preferably ammonia and/or urea.

In the present invention, the temperature of the FCC tail gas after being further cooled in the second-stage waste heat recovery system in Step (1) is preferably from 140 to 220°C.

When the second-stage waste heat recovery system is employed for further cooling the FCC tail gas, the FCC tail gas discharged after the treatment in the second-stage waste heat recovery system is fed into the dust removal and desulfurization system, where the FCC tail gas is further cooled by the second-stage waste heat recovery system in such a conventional manner in the art that a low-pressure steam of 0.3 to 0.8 MPa and a preheated soft water are preferably produced as by-products.

In the present invention, the desulfurization in Step (2) is carried out following a conventional desulfurization process in the art. During the desulfurization process in Step (2), a bottom absorption liquid is collected at the bottom of the absorption tower, a part of which is fed to the ammonium sulfate post-processing system, and the other part of which is oxidized with an oxygen-containing gas, replenished with an ammonia-containing absorbent, and then recycled to the absorption section of the absorption tower.

Preferably, the oxygen-containing gas is preferably air.

Preferably, the ammonia-containing absorbent is preferably aqueous ammonia of 10-25% by weight and/or liquid ammonia.

Preferably, the bottom absorption liquid recycled to the absorption section accounts for 75-98% by weight of the total bottom absorption liquid.

In the cleaned flue gas obtained by the method for denitration and desulfurization of and dust removal from an FCC tail gas by an ammonia-based process according to the present invention, the NOₓ concentration is ≤ 100 mg/Nm³, the SO₂ concentration is ≤ 50 mg/Nm³, the total dust level is ≤ 20 mg/Nm³, and the dust removal efficiency is not less than 80%.

The quality of the by-product ammonium sulfate obtained from the method for denitration and desulfurization of and dust removal from an FCC tail gas by an ammonia-based process according to the present invention meets the requirement as specified by GB535-1995.

The above-described preferred conditions may be arbitrarily combined to obtain the preferred examples of the present invention, on the basis of common knowledge in the art.

The reagents and starting materials used in the present invention are commercially available.

The present invention has the following positive effects. The process of the present invention has no waste water discharge and no secondary pollution, enables the synergetic control of various pollutants and recovery of sulfur dioxide by resourcelization to obtain the finished product ammonium sulfate, and can reduce the investment and operation cost and operate stably for a long period of time.

### Brief Description of Accompanying Drawings

Fig. 1 is a process flow chart of Example 1.
Fig. 2 is a schematic structural view of an apparatus for denitration and desulfurization of and dust removal from an FCC tail gas by an ammonia-based process provided in Example 1.

### List of numerals:

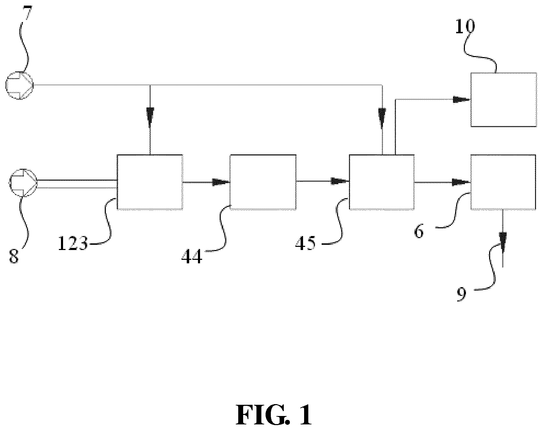

In Fig. 1:
6: ammonium sulfate post-processing system; 7: ammonia;
8: FCC tail gas; 9: ammonium sulfate;
10: cleaned tail gas; 123: denitration and waste heat recovery system;
44: dedusting system; 45: desulfurization system;

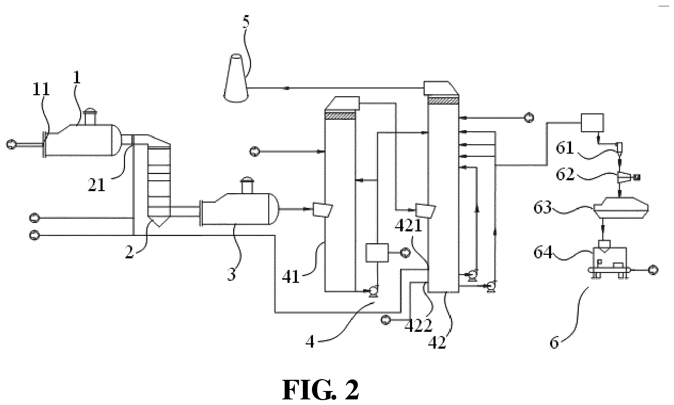

In Fig. 2:
1: first-stage waste heat recovery system; 2: denitration system;
3: second-stage waste heat recovery system; 4: dust removal and desulfurization system;
5: tail gas exhaust system; 6: ammonium sulfate post-processing system;
11: inlet for FCC tail gas; 21: feed port for denitration reducing agent;
41: dedusting tower; 42: absorption tower; 421: inlet for ammonia-containing absorbent;
422: inlet for air as oxidant; 61: evaporation and crystallization device;
62: cyclone; 63: centrifuge;
64: dryer; 65: packaging machine.

### Detailed Description

Hereinafter, the present invention is further illustrated by way of examples; however, the present invention is not limited thereto. The experimental methods in the following examples where no specific conditions are given are implemented according to conventional methods and conditions, or selected in accordance with the product specification.

In GB535-1995, the parameters required for ammonium sulfate of the first grade are: N content ≥ 21%, water content ≤ 0.3%, and free acid content ≤ 0.05%.

In Example 1 below, the process flow is as follows. An FCC tail gas 8 enters a denitration and waste water recovery system 123, for the purpose of denitration under the action of ammonia 7. The FCC tail gas after denitration enters a dedusting system 44, and then enters a desulfurization system 45 for further desulfurization under the action of ammonia 7. The cleaned tail gas 10 after desulfurization is discharged via a tail gas processing system, and the remaining circulating liquid enters an ammonium sulfate post-processing system 6, where ammonium sulfate 9 is obtained. The specific process is as shown in Fig. 1.

### Example 1 (not according to the invention)

This example provides an apparatus for denitration and desulfurization of and dust removal from an FCC tail gas by an ammonia-based process, which has a processing capacity of 100,0000 tons/year. The apparatus includes a first-stage waste heat recovery system 1, a denitration system 2, a second-stage waste heat recovery system 3, a dust removal and desulfurization system 4, a tail gas exhaust system 5, and an ammonium sulfate post-processing system 6. The first-stage waste heat recovery system 1 has an inlet 11 of the FCC tail gas provided thereon. The denitration system 2 is connected to the first-stage waste heat recovery system 1, and has a feed port 21 of a denitration reducing agent thereon. The second-stage waste heat recovery system 3 is connected to the denitration system 2. The dust removal and desulfurization system 4 includes a dedusting unit and a desulfurization unit disposed separately. In this example, the dedusting unit is a dedusting tower 41 connected to the second-stage waste heat recovery system 3; and the desulfurization unit is an absorption tower 42 connected to the dedusting tower 41 and also to the tail gas exhaust system 5 and the ammonium sulfate post-processing system 6 respectively. The absorption tower 42 has an inlet 421 for an ammonia-containing absorbent and an inlet 422 for air as oxidant provided thereon, specifically as shown in Fig. 2.

In this example, the dedusting tower is provided 3 layers of washing liquid sprayer, where the liquid to gas ratio between each layer of the washing liquid sprayers is 1.5 L/m³, the spray coverage rate of each single layer is 140%, and the total spray coverage rate of the dedusting tower is not less than 400%. The dedusting tower is provided with 2 layers of demisters in an upper part of the dedusting tower, which are baffle and roof type demisters. The dust removal efficiency of the dedusting tower is not less than 80%. The solid-containing washing liquid obtained in the dedusting tower is fed to a filtering system for solid removal, and the washing liquid removed of the solid is recycled for washing the FCC tail gas.

In this example, an oxidation tank is provided at the bottom of the absorption tower 42, and 3 layers of absorption liquid sprayers are provided in an absorption section above the inlet for the flue gas, where the liquid to gas ratio between each layer of the washing liquid sprayers is 1.25 L/m³, the spray coverage rate of each single layer is 130%, and the total spray coverage rate of the dedusting tower is 320%. The absorption liquids of different oxidation rates are drawn from 2 different positions of the oxidation tank at the bottom of the absorption tower, one of which is recycled for absorption by an absorption circulation pump, and the other of which is fed to an evaporation and crystallization system. A fine particulate control section is provided above the absorption section, and the fine particulate control section includes 2 layers of demisters provided above a sprayer layer in a washing layer, and the demisters in the washing layer are roof type and wire mesh demisters.

In this example, the ammonium sulfate post-processing system 6 includes an evaporation and crystallization device 61, a cyclone 62, a centrifuge 63, a dryer 64, and a packaging machine 65 connected in sequence.

In this example, the shell, the internals, and the pipes of the dedusting tower, the absorption tower, and the evaporation and crystallization device are all made with a stainless-steel material of Grade 022Cr17Ni12Mo2.

This example further provides a method for denitration and desulfurization of and dust removal from an FCC tail gas by an ammonia-based process, using the apparatus for denitration and desulfurization of and dust removal from an FCC tail gas by an ammonia-based process. The method comprises the steps of:
(1) entering the FCC tail gas, where the flow rate is 262000 Nm³/h, the temperature of the FCC tail gas is 600-650°C, the dust level in the flue gas is 200 mg/Nm³ in a normal case, the SO₂ concentration is 3550 mg/Nm³, the NOₓ concentration is 350 mg/Nm³, the dust level is 7500 mg/Nm³ under the operating condition of catalyst loss, the duration of catalyst loss is 2.5 h, and the catalyst lost is 4.91 t, into the first-stage waste heat recovery system where the temperature of the FCC tail gas is reduced to 335°C, and the heat of the tail gas is utilized by the first-stage waste heat recovery system to produce steam of 4 MPa at a rate of 11.6 t/h for output;
(2) entering the flue gas at 335°C into the denitration system and denitrating with 5-15% aqueous ammonia, where after adequate reaction on the surface of the denitration catalyst in the denitration reactor, the nitrogen oxide content is decreased to 35 mg/Nm³, and the denitration rate is 90%.
(3) after the treatment in the denitration system, entering the flue gas into the second-stage waste heat recovery system via a flue gas vent, where steam of 0.6 MPa is produced at 3.3 t/h as a by-product, and the temperature of the flue gas is reduced to 166°C in the second-stage waste heat recovery system;
(4) after the treatment in the second-stage waste heat recovery system, entering the discharged FCC tail gas into the dedusting tower for dust removal and into the absorption tower for desulfurization, where the solid-containing washing liquid obtained in the dedusting tower is fed to a filtering system for solid removal, and the washing liquid removed of the solid is recycled for washing the FCC tail gas; and the FCC tail gas entering the absorption tower is desulfurized with 5-15% aqueous ammonia; and
(5) after the desulfurization, discharging the cleaned flue gas via the tail gas exhaust system, where the NOₓ content is 35 mg/Nm³, the SO₂ content is 38 mg/Nm³, the dust level is 11.5 mg/Nm³ in a normal case and is 21mg/Nm³ under the operating condition of catalyst loss; the 40% ammonium sulfate solution produced as a by-product at about 4.7 t/h is evaporated and recrystallized, vortexed, separated by centrifugation, dried, and packaged, to obtain a finished product ammonium sulfate at 1.89 t/h, the quality of which (nitrogen content: 21.05%, water content: 0.2%, and free acid content: 0.03%) meets the requirements for ammonium sulfate of the first grade as specified by GB535-1995.

The list of the methods and main instruments for detecting various indices in this example is shown in Table 1. The parameters of main raw materials and the product are shown in Table 2.

**Table 1. List of the methods and main instruments for detecting various indices**

| No. | Item monitored | Standard analytical method and code | Instrument and model | Instrument # |
|---|---|---|---|---|
| 1 | Flue dust | Determination of particulates and sampling methods of gaseous pollutants emitted from exhaust gas of stationary source GB/T16157-1996 | Laoying 3012H model flue dust sampling instrument Electronic balance BS224S, AB204-S | 8042448, 08244496 18360886, 1119051201 |
| 2 | SO₂ | Determination of sulphur dioxide from exhausted gas of stationary source: fixed-potential electrolysis HJ/T 57-2000 | Testo 350 flue gas analytical instrument | 10^{#}, 1^{#} |
| 3 | NOₓ | Determination of nitrogen dioxide from exhausted gas of stationary source: fixed-potential electrolysis HJ/T 693-2014 | Testo 350 flue gas analytical instrument | 10^{#}, 1^{#} |
| 4 | Ammonia | Ambient air and exhaust gas-Determination of ammonia-Nessler's reagent spectrophotometry HJ 533-2009 | Laoying 3072H model 722 spectrophotometer | 02085809, 2c5BP363 |
| 5 | Oxygen content in the flue gas | Electrochemical method - Specifications and test procedures for continuous emission monitoring systems of flue gas emitted from stationary sources (Appendix B) (HJ/T 76-2007) | Testo 350 flue gas analytical instrument | 10^{#}, 1^{#} |
| 6 | Temperature of the flue gas | Platinum resistor method Determination of particulates and sampling methods of gaseous pollutants emitted from exhaust gas of stationary source (GB/T 16157-1996) | TES-1310 | / |
| 7 | Humidity of the flue gas | Specifications and test procedures for continuous emission monitoring systems of flue gas emitted from stationary sources | Laoying 3012H model flue dust sampling instrument | 8042448, 08244496 |
| | | (Appendix B) (HJ/T 76-2007) | | |
| 8 | Ammonium sulfate | Ammonium sulfate (GB 535-1995) | Analytical balance, PH meter and other conventional laboratory instruments | |

**Table 2. Parameters of main raw materials and the product**

| No. | Technic index | Unit | Value |
|---|---|---|---|
| 1 | Flow rate of FCC tail gas | Nm³/h | 262000 |
| 2 | Temperature of the flue gas at the inlet | °C | 600-650 |
| 3 | NOₓ concentration in the flue gas | mg/Nm³ | 350 |
| 4 | SO₂ concentration in the flue gas | mg/Nm³ | 3550 |
| 5 | Dust level in the flue gas | mg/Nm³ | 200 |
| 6 | NOₓ concentration in the flue gas at the outlet | mg/Nm³ | 35 |
| 7 | SO₂ concentration in the flue gas at the outlet | mg/Nm³ | 38 |
| 8 | Dust level in the flue gas at the outlet | mg/Nm³ | Normal case: 11.5; Operating condition of catalyst loss: 21 |
| 9 | Absorption temperature | °C | 52-54 |
| 10 | Ammonia recovery rate | % | 98.9 |
| 11 | Quality of the product ammonium sulfate | | GB535: first grade |

The desulfurization efficiency in this example is 98.9%, and the denitration efficiency is 90%.

### Comparative Example 1

CN104941423A is taken as a comparative example, in which the flue gas of 100,0000 tons/year produced during the catalyst regeneration of a catalytic cracking unit is treated, where the flow rate of the flue gas is 135000 Nm³/h, the temperature is 950°C, the moisture content is 12%, the nitrogen oxide concentration is 360 mg/Nm³, the sulfur dioxide concentration is 2300 mg/Nm³, the dust level is 150 mg/Nm³, and the desulphurizing agent is 99.6% liquid ammonia. In a normal case, the denitration efficiency is ≥ 88.9%, the desulfurization efficiency is 98.5%, the NOₓ concentration in the cleaned flue gas is 38 mg/Nm³, the SO₂ concentration is 32 mg/Nm³, the dust level is lower than 15 mg/Nm³, and the nitrogen content in the by-product ammonium sulfate is 20.8%.

However, the operating condition of catalyst loss is not taken into consideration. In this case, if the flue gas is treated with the apparatus according to Chinese Patent No. CN 104941423A, the following effects are finally obtained.

A large amount of dust enters the absorption liquid, such that the content of insoluble solid in the absorption liquid rises to 3% or higher. This causes the product ammonium sulfate to fail to be recrystallized and discharged. Even if the product ammonium sulfate could be discharged, the N content in the product would be decreased to 18% or below, and thus the product cannot be marketed. Moreover, the absorption circulation pump is clogged and worn, and the apparatus needs to be shut down to clean up the accumulated solids in the absorption tower.

The effects of the present invention are as follows. The denitration efficiency is ≥ 90%, the desulfurization efficiency is 98.9%, the NOₓ concentration in the cleaned flue gas is 35 mg/Nm³, the SO₂ concentration is 38mg/Nm³, the dust level is 11.5 mg/Nm³, and the nitrogen content in the by-product ammonium sulfate is 21.06%. The apparatus of the Example can operate normally under the operating condition of catalyst loss, and is obviously advantageous over that of the comparative example, as indicated by a dust level at the outlet of 21 mg/Nm³.

## Claims

1. An apparatus for denitration and desulfurization of and dust removal from an FCC tail gas by an ammonia-based process, comprising a first-stage waste heat recovery system, a denitration system, a dust removal and desulfurization system, a tail gas exhaust system, and an ammonium sulfate post-processing system, wherein the dust removal and desulfurization system comprises a dedusting tower and an absorption tower disposed separately, wherein top and bottom of the absorption tower are connected respectively to the tail gas exhaust system and the ammonium sulfate post-processing system; the dedusting tower is provided with at least 2 layers of washing liquid sprayers, and at least one layer of demisters are provided above the washing liquid sprayers in the dedusting tower; and the absorption tower comprises sequentially, from bottom to top, an oxidation section, an absorption section, and a fine particulate control section, wherein the absorption section is provided with at least 2 layers of sprayers in the absorption section, and the fine particulate control section is provided with 1 to 4 cyclically washing layers with dilute ammonium sulfate solution, wherein the first-stage waste heat recovery system, the denitration system, the dedusting tower and the absorption tower are connected in sequence.

2. The apparatus for denitration and desulfurization of and dust removal from an FCC tail gas by an ammonia-based process according to claim 1, further comprising a second-stage waste heat recovery system, wherein the first-stage waste heat recovery system, the denitration system, the second-stage waste heat recovery system, the dedusting tower, and the absorption tower are connected in sequence.

3. The apparatus for denitration and desulfurization of and dust removal from an FCC tail gas by an ammonia-based process according to claim 1, wherein the denitration system is a selective catalytic reduction reactor, in which a rectifier is provided in an upper part of the selective catalytic reduction reactor, and an ammonia injection grid is provided at an inlet for the FCC tail gas of the selective catalytic reduction reactor.

4. The apparatus for denitration and desulfurization of and dust removal from an FCC tail gas by an ammonia-based process according to claim 3, wherein the tail gas exhaust system is a tail gas exhaust chimney.

5. The apparatus for denitration and desulfurization of and dust removal from an FCC tail gas by an ammonia-based process according to claim 1, wherein 2 to 5 layers of washing liquid sprayers are provided in the dedusting tower, in which the liquid to gas ratio between each layer of the washing liquid sprayers is not less than 1.1 L/m³, the spray coverage rate is not less than 120%, and the total spray coverage rate of the dedusting tower is not less than 200%; and the dedusting tower comprises 1 to 5 layers of demisters.

6. The apparatus for denitration and desulfurization of and dust removal from an FCC tail gas by an ammonia-based process according to claim 5 wherein the demister of the dedusting tower is one or more of a baffle demister, a roof type demister, and a wire mesh demister.

7. The apparatus for denitration and desulfurization of and dust removal from an FCC tail gas by an ammonia-based process according to any one of claims 5 to 6, wherein the oxidation section is provided with 3 to 8 layers of gas-liquid dispersion enhancers.

8. The apparatus for denitration and desulfurization of and dust removal from an FCC tail gas by an ammonia-based process according to any one of claims 5 to 7, wherein the absorption section of the absorption tower comprises 2 to 4 layers of sprayers, in which the liquid to gas ratio between each layer of the sprayers in the absorption section is not less than 1.1 L/m³, the spray coverage rate is not less than 120%, and the total spray coverage rate of the absorption section is not less than 300%.

9. The apparatus for denitration and desulfurization of and dust removal from an FCC tail gas by an ammonia-based process according to any one of claims 5 to 8, wherein the 1 to 4 cyclically washing layer with dilute ammonium sulfate solution of the absorption tower is provided with more than 1 layer of sprayers in the washing layer, and more than 1 layer of demisters are provided above the sprayers in the washing layer, in which the liquid to gas ratio between each layer of the sprayers in the washing layer is not less than 1.1 L/m³, the spray coverage rate is not less than 120%, and the total spray coverage rate of the fine particulate control section is not less than 300% , and preferably the washing layer of the dedusting tower comprises 2 to 4 layers of sprayers, and 1 to 5 layers of demisters

10. The apparatus for denitration and desulfurization of and dust removal from an FCC tail gas by an ammonia-based process according to claim 1, wherein the ammonium sulfate post-processing system comprises an evaporation and crystallization device, a cyclone, a centrifuge, a dryer and a packaging machine connected in sequence, in which the evaporation and crystallization device is connected to the absorption tower.

11. A method for denitration and desulfurization of and dust removal from an FCC tail gas by an ammonia-based process, using the apparatus for denitration and desulfurization of and dust removal from an FCC tail gas by an ammonia-based process according to any one of claims 1 to 10, the method comprising the steps of:
(1) entering the FCC tail gas sequentially into the first-stage waste heat recovery system and the denitration system for cooling and denitration respectively, in which the temperature of the tail gas is reduced to 250-350°C;
(2) after treatment in the denitration system, entering the discharged FCC tail gas into the dust removal and desulfurization system, for dust removal in the dedusting tower and desulfurization in the absorption tower respectively; and
(3) discharging the cleaned tail gas after desulfurization via the tail gas exhaust system, and collecting a by-product ammonium sulfate in the ammonium sulfate post-processing system.

12. The method for denitration and desulfurization of and dust removal from an FCC tail gas by an ammonia-based process according to claim 11, wherein after treatment in the denitration system, further recovering heat from the discharged FCC tail gas in a second-stage waste heat recovery system, and then entering the discharged FCC tail gas into the dust removal and desulfurization system.

13. The method for denitration and desulfurization of and dust removal from an FCC tail gas by an ammonia-based process according to claim 11, wherein the temperature of the FCC tail gas entering the first-stage waste heat recovery system is from 580 to 950°C, the NOₓ concentration is 100 to 1200 mg/Nm³, the SO₂ concentration is 200 to 30000 mg/Nm³, and the total dust level is 50 to 10000 mg/Nm³.

14. The method for denitration and desulfurization of and dust removal from an FCC tail gas by an ammonia-based process according to claim 13, wherein the temperature of the FCC tail gas entering the first-stage waste heat recovery system is from 600 to 670°C, the NOₓ concentration is 250 to 800mg/Nm³, the SO₂ concentration is 500 to 5000 mg/Nm³, and the total dust level is 100 to 300 mg/Nm³.

15. The method for denitration and desulfurization of and dust removal from an FCC tail gas by an ammonia-based process according to claim 12, wherein the temperature of the FCC tail gas after being further cooled in the second-stage waste heat recovery system in Step (2) is from 140 to 220°C; and when the second-stage waste heat recovery system is employed for further cooling the FCC tail gas, the FCC tail gas discharged after the treatment in the second-stage waste heat recovery system is fed into the dust removal and desulfurization system, where the FCC tail gas is further cooled by the second-stage waste heat recovery system in such
a manner that a low-pressure steam of 0.3 to 0.8 MPa and a preheated soft water are produced as by-products.

16. The method for denitration and desulfurization of and dust removal from an FCC tail gas by an ammonia-based process according to claim 11, wherein during the desulfurization process in Step (2), a bottom absorption liquid is collected at the bottom of the absorption tower, a part of which is fed to the ammonium sulfate post-processing system, and other part of which is oxidized with an oxygen-containing gas, replenished with an ammonia-containing absorbent, and then recycled to the absorption section of the absorption tower.

17. The method for denitration and desulfurization of and dust removal from an FCC tail gas by an ammonia-based process according to claim 16 , wherein the oxygen-containing gas is air.

18. The method for denitration and desulfurization of and dust removal from an FCC tail gas by an ammonia-based process according to claim 16, wherein the ammonia-containing absorbent is at least one of aqueous ammonia of 10-25% by weight and liquid ammonia.

19. The method for denitration and desulfurization of and dust removal from an FCC tail gas by an ammonia-based process according to claim 16, wherein the bottom absorption liquid recycled to the absorption section accounts for 75-98% by weight of the total bottom absorption liquid.

## Patentansprüche

1. Vorrichtung zur Denitrierung und Entschwefelung und Entstaubung von FCC-Restgas durch ein ammoniakbasiertes Verfahren, umfassend ein Erststufen-Wärmerückgewinnungssystem, ein Denitrierungssystem, ein Entstaubungs- und Entschwefelungssystem, ein Abgassystem und ein Ammoniumsulfat-Nachbehandlungssystem, wobei das Entstaubungs- und Entschwefelungssystem einen Entstaubungsturm und einen getrennt angeordneten Absorptionsturm umfasst, wobei die Oberseite und der Boden des Absorptionsturms jeweils mit dem Abgassystem und dem Ammoniumsulfat-Nachbehandlungssystem verbunden sind; der Entstaubungsturm ist mit wenigstens 2 Schichten von Waschflüssigkeitssprühern versehen und wenigstens eine Schicht von Entneblern ist über den Waschflüssigkeitssprühern in dem Entstaubungsturm vorgesehen; und der Entstaubungsturm umfasst sequentiell vom Boden zur Oberseite einen Oxidationsabschnitt, einen Absorptionsabschnitt und einen Feinpartikelsteuerabschnitt, wobei der Absorptionsabschnitt mit wenigstens 2 Schichten von Sprühern in dem Absorptionsabschnitt versehen ist und der Feinpartikelsteuerabschnitt mit 1 bis 4 zyklischen Waschschichten mit verdünnter Ammoniumsulfatlösung versehen ist, wobei das Erststufen-Wärmerückgewinnungssystem, das Denitrierungssystem, der Entstaubungsturm und der Absorptionsturm in Reihe verbunden sind.

2. Vorrichtung zur Denitrierung und Entschwefelung und Entstaubung von FCC-Restgas durch ein ammoniakbasiertes Verfahren nach Anspruch 1, ferner umfassend ein Zweitstufen-Wärmerückgewinnungssystem, wobei das Erststufen-Wärmerückgewinnungssystem, das Denitrierungssystem, das Zweitstufen-Wärmerückgewinnungssystem, der Entstaubungsturm und der Absorptionsturm in Reihe verbunden sind.

3. Vorrichtung zur Denitrierung und Entschwefelung und Entstaubung von FCC-Restgas durch ein ammoniakbasiertes Verfahren nach Anspruch 1, wobei das Denitrierungssystem ein selektiver katalytischer Reduktionsreaktor ist, in dem ein Gleichrichter in einem oberen Teil des selektiven katalytischen Reduktionsreaktors vorgesehen ist und ein Ammoniakinjektionsgitter an einem Einlass für das FCC-Restgas des selektiven katalytischen Reaktors vorgesehen ist.

4. Vorrichtung zur Denitrierung und Entschwefelung und Entstaubung von FCC-Restgas durch ein ammoniakbasiertes Verfahren nach Anspruch 3, wobei das Abgassystem ein Abgaskamin ist.

5. Vorrichtung zur Denitrierung und Entschwefelung und Entstaubung von FCC-Restgas durch ein ammoniakbasiertes Verfahren nach Anspruch 1, wobei 2 bis 5 Schichten von Waschflüssigkeitssprühern in dem Entstaubungsturm vorgesehen sind, wobei das Flüssigkeit/Gas-Verhältnis nicht weniger als 1,1 1/m³, die Sprühbedeckungsrate nicht weniger als 120 % und die Gesamtsprühbedeckungsrate des Entstaubungsturms nicht weniger als 200 % beträgt; und der Entstaubungsturm 1 bis 5 Schichten von Entneblern umfasst.

6. Vorrichtung zur Denitrierung und Entschwefelung und Entstaubung von FCC-Restgas durch ein ammoniakbasiertes Verfahren nach Anspruch 5, wobei der Entnebler des Entstaubungsturms einer oder mehrere aus einem Prallwand-Entnebler, einem Dachtyp-Entnebler und einem Drahtgeflecht-Entnebler ist.

7. Vorrichtung zur Denitrierung und Entschwefelung und Entstaubung von FCC-Restgas durch ein ammoniakbasiertes Verfahren nach einem der Ansprüche 5 bis 6,
wobei der Oxidationsabschnitt mit 3 bis 8 Schichten von Gas-Flüssigkeit-Dispersionsverstärkern versehen ist.

8. Vorrichtung zur Denitrierung und Entschwefelung und Entstaubung von FCC-Restgas durch ein ammoniakbasiertes Verfahren nach einem der Ansprüche 5 bis 7,
wobei der Absorptionsabschnitt des Absorptionsturms 2 bis 4 Schichten von Sprühern umfasst, wobei das Flüssigkeit/Gas-Verhältnis zwischen jeder Schicht der Sprüher in dem Absorptionsabschnitt nicht weniger als 1,1 1/m³, die Sprühbedeckungsrate nicht weniger als 120 % und die Gesamtsprühbedeckungsrate des Entstaubungsturms nicht weniger als 300 % beträgt.

9. Vorrichtung zur Denitrierung und Entschwefelung und Entstaubung von FCC-Restgas durch ein ammoniakbasiertes Verfahren nach einem der Ansprüche 5 bis 8, wobei die 1 bis 4 zyklischen Waschschichten mit verdünnter Ammoniumsulfatlösung des Absorptionsturms mit mehr als 1 Schicht von Sprühern in der Waschschicht versehen sind und mehr als 1 Schicht von Entneblern über den Sprühern in der Waschschicht vorgesehen ist, wobei das Flüssigkeit/Gas-Verhältnis zwischen jeder Schicht der Sprüher in der Waschschicht nicht weniger als 1,1 1/m³, die Sprühbedeckungsrate nicht weniger als 120 % und die Gesamtsprühbedeckungsrate des Feinpartikelsteuerabschnitts nicht weniger als 300 % beträgt und die Waschschicht des Entstaubungsturms vorzugsweise 2 bis 4 Schichten von Sprühern und 1 bis 5 Schichten von Entneblern umfasst.

10. Vorrichtung zur Denitrierung und Entschwefelung und Entstaubung von FCC-Restgas durch ein ammoniakbasiertes Verfahren nach Anspruch 1, wobei das Ammoniumsulfat-Nachbehandlungssystem eine Verdampfungs- und Kristallisationsvorrichtung, einen Zyklon, eine Zentrifuge, einen Trockner und eine in Reihe verbundene Verpackungsmaschine umfasst, wobei die Verdampfungs- und Kristallisationsvorrichtung mit dem Absorptionsturm verbunden ist.

11. Verfahren zur Denitrierung und Entschwefelung und Entstaubung von FCC-Restgas durch ein ammoniakbasiertes Verfahren unter Verwendung der Vorrichtung zur Denitrierung und Entschwefelung und Entstaubung von FCC-Restgas durch ein ammoniakbasiertes Verfahren nach Anspruch 1 bis 10, wobei das Verfahren folgende Schritte umfasst:
(1) sequentielles Eingeben des FCC-Restgases in das Erststufen-Wärmerückgewinnungssystem und das Denitrierungssystem zur Kühlung bzw. Denitrierung, wobei die Temperatur des Restgases auf 250-350°C abgesenkt wird;
(2) nach der Behandlung im Denitrierungssystem, Eingeben des ausgeleiteten FCC-Restgases in das Entstaubungs und Entschwefelungssystem zur Entstaubung in dem Entstaubungsturm bzw. zur Entschwefelung in dem Absorptionsturm; und
(3) Ausleiten des gereinigten Restgases nach der Entschwefelung über das Restgas-Abgassystem und Sammeln des Nebenprodukts Ammoniumsulfat in dem Ammoniumsulfat-Nachbehandlungssystem.

12. Verfahren zur Denitrierung und Entschwefelung und Entstaubung von FCC-Restgas durch ein ammoniakbasiertes Verfahren nach Anspruch 11, wobei nach der Behandlung in dem Denitrierungssystem weitere Wärme aus dem ausgeleiteten FCC-Restgas in einem Zweitstufen-Wärmerückgewinnungssystem zurückgewonnen wird und anschließend das ausgeleitete FCC-Restgas in das Entstaubungs- und Entschwefelungssystem eingeleitet wird.

13. Verfahren zur Denitrierung und Entschwefelung und Entstaubung von FCC-Restgas durch ein ammoniakbasiertes Verfahren nach Anspruch 11, wobei die Temperatur des in das Erststufen-Wärmerückgewinnungssystem eingeleiteten FCC-Restgases zwischen 580 und 950°C, die NOₓ-Konzentration zwischen 100 und 1200 mg/Nm³, die SO₂-Konzentration zwischen 200 und 30000 mg/Nm³ und die Gesamtstaubkonzentration zwischen 50 und 10000 mg/Nm³ beträgt.

14. Verfahren zur Denitrierung und Entschwefelung und Entstaubung von FCC-Restgas durch ein ammoniakbasiertes Verfahren nach Anspruch 13, wobei die Temperatur des in das Erststufen-Wärmerückgewinnungssystem eingeleiteten FCC-Restgases zwischen 600 und 670°C, die NOₓ-Konzentration zwischen 250 und 800mg/Nm³, die SO₂-Konzentration zwischen 500 und 5000 mg/Nm³ und die Gesamtstaubkonzentration zwischen 100 und 300 mg/Nm³ beträgt.

15. Verfahren zur Denitrierung und Entschwefelung und Entstaubung von FCC-Restgas durch ein ammoniakbasiertes Verfahren nach Anspruch 12, wobei die Temperatur des FCC-Restgases nach dem weiteren Abkühlen in dem Zweitstufen-Wärmerückgewinnungssystem in Schritt (2) zwischen 140 und 220°C beträgt; und wenn das Zweitstufen-Wärmerückgewinnungssystem zum weiteren Abkühlen des FCC-Restgases eingesetzt wird, wird das nach der Behandlung in dem Zweitstufen-Wärmerückgewinnungssystem ausgeleitete FCC-Restgas dem Entstaubungs- und Entschwefelungssystem zugeführt, wo das FCC-Restgas weiter durch das Zweitstufen-Wärmerückgewinnungssystem abgekühlt wird, so dass Niederdruckdampf mit 0,3 bis 0,8 MPa und vorgewärmtes weiches Wasser als Nebenprodukte erzeugt werden.

16. Verfahren zur Denitrierung und Entschwefelung und Entstaubung von FCC-Restgas durch ein ammoniakbasiertes Verfahren nach Anspruch 11,
wobei während des Entschwefelungsverfahrens
in Schritt (2) eine Bodenabsorptionsflüssigkeit am Boden des Absorptionsturms gesammelt wird, von der ein Teil dem Ammoniumsulfat-Nachbehandlungssystem und ein anderer Teil mit einem sauerstoffhaltigen Gas oxidiert wird, das mit einem ammoniakhaltigen Absorptionsmittel ergänzt und anschließend in den Absorptionsabschnitt des Absorptionsturms zurückgeführt wird.

17. Verfahren zur Denitrierung und Entschwefelung und Entstaubung von FCC-Restgas durch ein ammoniakbasiertes Verfahren nach Anspruch 16,
wobei das sauerstoffhaltige Gas Luft ist.

18. Verfahren zur Denitrierung und Entschwefelung und Entstaubung von FCC-Restgas durch ein ammoniakbasiertes Verfahren nach Anspruch 16,
wobei das ammoniakhaltige Absorptionsmittel wenigstens eines aus wässrigem Ammoniak mit 10-25 Gew.-% und flüssigem Ammoniak ist.

19. Verfahren zur Denitrierung und Entschwefelung und Entstaubung von FCC-Restgas durch ein ammoniakbasiertes Verfahren nach Anspruch 16,
wobei die Bodenabsorptionsflüssigkeit, die in den Absorptionsabschnitt zurückgeführt wird, 75-98 % Gew.-% der gesamten Bodenabsorptionsflüssigkeit ausmacht.

## Revendications

1. Un appareil pour la dénitration et la désulfuration et l'élimination des poussières d'un gaz résiduaire FCC par un procédé à base d'ammoniac, comprenant un système de récupération de chaleur de premier étage, un système de dénitration, un système d'élimination des poussières et de désulfuration, un système d'échappement de gaz résiduaire, et un système de post-traitement de sulfate d'ammonium, où le système d'élimination des poussières et de désulfuration comprend une tour de dépoussiérage et une tour d'absorption disposées séparément, où le haut et le bas de la tour d'absorption sont raccordés respectivement au système d'échappement de gaz résiduaire et au système de post-traitement de sulfate d'ammonium ; la tour de dépoussiérage est pourvue d'au moins 2 couches de pulvérisateurs de liquide de lavage, et au moins une couche de dévésiculeurs est prévue au-dessus des pulvérisateurs de liquide de lavage dans la tour de dépoussiérage ; et la tour d'absorption comprend séquentiellement, de bas en haut, une section d'oxydation, une section d'absorption, et une section de commande de particules fines, où la section d'absorption est pourvue d'au moins 2 couches de pulvérisateurs dans la section d'absorption, et la section de commande de particules fines est pourvue de 1 à 4 couches de lavage cyclique avec une solution de sulfate d'ammonium diluée, où le système de récupération de chaleur de premier étage, le système de dénitration, la tour de dépoussiérage et la tour d'absorption sont raccordés en séquence.

2. L'appareil pour la dénitration et la désulfuration et l'élimination des poussières d'un gaz résiduaire FCC par un procédé à base d'ammoniac selon la revendication 1, comprenant en outre un système de récupération de chaleur de deuxième étage, où le système de récupération de chaleur de premier étage, le système de dénitration, le système de récupération de chaleur de deuxième étage, la tour de dépoussiérage, et la tour d'absorption sont raccordés en séquence.

3. L'appareil pour la dénitration et la désulfuration et l'élimination des poussières d'un gaz résiduaire FCC par un procédé à base d'ammoniac selon la revendication 1, où le système de dénitration est un réacteur de réduction catalytique sélective, dans lequel un redresseur est prévu dans une partie supérieure du réacteur de réduction catalytique sélective, et une grille d'injection d'ammoniac est prévue au niveau d'une admission pour le gaz résiduaire FCC du réacteur de réduction catalytique sélective.

4. L'appareil pour la dénitration et la désulfuration et l'élimination des poussières d'un gaz résiduaire FCC par un procédé à base d'ammoniac selon la revendication 3, où le système d'échappement de gaz résiduaire est une cheminée d'échappement de gaz résiduaire.

5. L'appareil pour la dénitration et la désulfuration et l'élimination des poussières d'un gaz résiduaire FCC par un procédé à base d'ammoniac selon la revendication 1, où de 2 à 5 couches de pulvérisateurs de liquide de lavage sont prévues dans la tour de dépoussiérage, dans lesquelles le rapport liquide/gaz entre chaque couche des pulvérisateurs de liquide de lavage n'est pas inférieur à 1,1 1/m³, le taux de couverture de pulvérisation n'est pas inférieur à 120 %, et le taux de couverture de pulvérisation totale de la tour de dépoussiérage n'est pas inférieur à 200 % ; et la tour de dépoussiérage comprend de 1 à 5 couches de dévésiculeurs.

6. L'appareil pour la dénitration et la désulfuration et l'élimination des poussières d'un gaz résiduaire FCC par un procédé à base d'ammoniac selon la revendication 5, où le dévésiculeur de la tour de dépoussiérage est un ou plusieurs dévésiculeurs parmi un dévésiculeur à chicanes, un dévésiculeur de type toit, et un dévésiculeur à treillis métallique.

7. L'appareil pour la dénitration et la désulfuration et l'élimination des poussières d'un gaz résiduaire FCC par un procédé à base d'ammoniac selon l'une quelconque des revendications 5 à 6, où la section d'oxydation est pourvue de 3 à 8 couches d'amplificateurs de dispersion de gaz-liquide.

8. L'appareil pour la dénitration et la désulfuration et l'élimination des poussières d'un gaz résiduaire FCC par un procédé à base d'ammoniac de l'une quelconque des revendications 5 à 7, où la section d'absorption de la tour d'absorption comprend de 2 à 4 couches de pulvérisateurs, dans lesquelles le rapport liquide/gaz entre chaque couche des pulvérisateurs dans la section d'absorption n'est pas inférieur à 1,1 1/m³, le taux de couverture de pulvérisation n'est pas inférieur à 120 %, et le taux de couverture de pulvérisation totale de la section d'absorption n'est pas inférieur à 300 %.

9. L'appareil pour la dénitration et la désulfuration et l'élimination des poussières d'un gaz résiduaire FCC par un procédé à base d'ammoniac selon l'une quelconque des revendications 5 à 8, où les 1 à 4 couches de lavage cyclique avec une solution de sulfate d'ammonium diluée de la tour d'absorption sont pourvues de plus de 1 couche de pulvérisateurs dans la couche de lavage, et plus de 1 couche de dévésiculeurs sont prévues au-dessus des pulvérisateurs dans la couche de lavage, dans lequel le rapport liquide/gaz entre chaque couche des pulvérisateurs dans la couche de lavage n'est pas inférieur à 1,1 1/m³, le taux de couverture de pulvérisation n'est pas inférieur à 120 %, et le taux de couverture de pulvérisation totale de la section de commande de particules fines n'est pas inférieur à 300 %, et préférablement la couche de lavage de la tour de dépoussiérage comprend de 2 à 4 couches de pulvérisateurs, et de 1 à 5 couches de dévésiculeurs.

10. L'appareil pour la dénitration et la désulfuration et l'élimination des poussières d'un gaz résiduaire FCC par un procédé à base d'ammoniac selon la revendication 1, où le système de post-traitement de sulfate d'ammonium comprend un dispositif d'évaporation et de cristallisation, un cyclone, une centrifugeuse, un séchoir et une machine d'emballage raccordés en séquence, dans lequel le dispositif d'évaporation et de cristallisation est raccordé à la tour d'absorption.

11. Une méthode pour la dénitration et la désulfuration et l'élimination des poussières d'un gaz résiduaire FCC par un procédé à base d'ammoniac, à l'aide de l'appareil pour la dénitration et la désulfuration et l'élimination des poussières d'un gaz résiduaire FCC par un procédé à base d'ammoniac selon l'une quelconque des revendications 1 à 10, le procédé comprenant les étapes consistant à :
(1) faire entrer le gaz résiduaire FCC de façon séquentielle dans le système de récupération de chaleur de premier étage et le système de dénitration pour le refroidissement et la dénitration respectivement, dans lequel la température du gaz résiduaire est réduite à 250-350 °C ;
(2) après le traitement dans le système de dénitration, faire entrer le gaz résiduaire FCC déchargé dans le système d'élimination des poussières et de désulfuration, pour l'élimination des poussières dans la tour de dépoussiérage et la désulfuration dans la tour d'absorption respectivement ; et
(3) décharger le gaz résiduaire nettoyé après la désulfuration par l'intermédiaire du système d'échappement de gaz résiduaire, et collecter un sulfate d'ammonium de sous-produit dans le système de post-traitement de sulfate d'ammonium.

12. La méthode pour la dénitration et la désulfuration et l'élimination des poussières d'un gaz résiduaire FCC par un procédé à base d'ammoniac selon la revendication 11, où après le traitement dans le système de dénitration, récupérer plus avant de la chaleur à partir du gaz résiduaire FCC déchargé dans un système de récupération de chaleur de deuxième étage, et ensuite faire entrer le gaz résiduaire FCC déchargé dans le système d'élimination des poussières et de désulfuration.

13. La méthode pour la dénitration et la désulfuration et l'élimination des poussières d'un gaz résiduaire de FCC par un procédé à base d'ammoniac selon la revendication 11, où la température du gaz résiduaire FCC entrant dans le système de récupération de chaleur de premier étage est de 580 à 950 °C, la concentration de NOₓ est de 100 à 1200 mg/Nm³, la concentration de SO2 est de 200 à 30000 mg/Nm³, et la teneur en poussières totale est de 50 à 10000 mg/Nm³.

14. La méthode pour la dénitration et la désulfuration et l'élimination des poussières d'un gaz résiduaire de FCC par un procédé à base d'ammoniac selon la revendication 13, où la température du gaz résiduaire FCC entrant dans le système de récupération de chaleur de premier étage est de 600 à 670 °C, la concentration de NOₓ est de 250 à 800mg/Nm³, la concentration de SO2 est de 500 à 5000 mg/Nm³, et la teneur en poussières totale est de 100 à 300 mg/Nm3.

15. La méthode pour la dénitration et la désulfuration et l'élimination des poussières d'un gaz résiduaire FCC par un procédé à base d'ammoniac selon la revendication 12, où la température du gaz résiduaire FCC après avoir été refroidie plus avant dans le système de récupération de chaleur de deuxième étage à l'Étape (2) est de 140 à 220 °C ; et lorsque le système de récupération de chaleur de deuxième étage est employé pour refroidir plus avant le gaz résiduaire FCC, le gaz résiduaire FCC déchargé après le traitement dans le système de récupération de chaleur de deuxième étage est amené dans le système d'élimination des poussières et de désulfuration, à l'intérieur duquel le gaz résiduaire FCC est refroidi plus avant par le système de récupération de chaleur de deuxième étage de manière à ce qu'une vapeur à basse pression de 0,3 à 0,8 MPa et une eau douce préchauffée soient produites sous forme de sous-produits.

16. La méthode pour la dénitration et la désulfuration et l'élimination des poussières d'un gaz résiduaire FCC par un procédé à base d'ammoniac selon la revendication 11, où pendant le procédé de désulfuration à l'Étape (2), un liquide d'absorption du bas est collecté au niveau du bas de la tour d'absorption, dont une partie est amenée dans le système de post-traitement de sulfate d'ammonium, et une autre partie est oxydée avec un gaz contenant de l'oxygène, rempli d'un absorbant contenant de l'ammoniac, et ensuite recyclée vers la section d'absorption de la tour d'absorption.

17. La méthode pour la dénitration et la désulfuration et l'élimination des poussières d'un gaz résiduaire FCC par un procédé à base d'ammoniac selon la revendication 16, où le gaz contenant de l'oxygène est de l'air.

18. La méthode pour la dénitration et la désulfuration et l'élimination des poussières d'un gaz résiduaire FCC par un procédé à base d'ammoniac selon la revendication 16, où l'absorbant contenant de l'ammoniac est au moins un ammoniac parmi de l'ammoniac aqueux de 10 à 25 % en poids et de l'ammoniac liquide.

19. La méthode pour la dénitration et la désulfuration et l'élimination des poussières d'un gaz résiduaire FCC par un procédé à base d'ammoniac selon la revendication 16, où le liquide d'absorption du bas recyclé vers la section d'absorption représente de 75 à 98 % en poids du liquide d'absorption du bas total.
